# EUROPÄISCHE PATENTANMELDUNG

(11) **EP 2 181 578 A2**
(43) Veröffentlichungstag der Anmeldung: **05.05.2010**
(21) Anmeldenummer: 09165153.9
(22) Anmeldetag: 10.07.2009
(51) Int. Cl.: A01D 41/12

(54) **Mähdrescher und Verfahren zum Ernten**

(30) Priorität: 22.09.2008 DE 102008048344
(71) Anmelder: CLAAS Selbstfahrende Erntemaschinen GmbH, 33428 Harsewinkel (DE)
(72) Erfinder: Baumgarten, Joachim, Dr., 48361, Beelen (DE); Niermann, Martin, 33428, Harsewinkel (DE); Terörde, Stefan, 48231, Warendorf (DE)

(57) **Zusammenfassung**

Mähdrescher (1) und Verfahren zum Ernten, wobei der Mähdrescher (1) eine Häckseleinrichtung (8) aufweist, um einen zu Gutstrom (40) zu häckseln. Der Häckseleinrichtung (8) ist eine Verteilenrichtung (38) zur Verteilung des Gutstroms (40) nachgeschaltet. Die Verteileinrichtung (38) umfasst Rotationskörper (39; 41, 42), welche derart strukturiert sind, so dass bei Rotation der Rotationskörper (39; 41, 42) ein Magnus-Effekt erzeugt wird, welcher eine seitliche Ablenkung (43) des Gutstroms (40) bewirkt.

## Beschreibung

Die Erfindung betrifft einen Mähdrescher und ein Verfahren zum Ernten von Erntegut mit einem Mähdrescher, wobei wenigstens ein Teil des Ernteguts gehäckselt und der gehäckselte Gutstrom anschließend auf dem Feld wieder zur Düngung verteilt wird.

Mähdrescher und Verfahren zum Ernten von Erntegut sind im Stand der Technik bekannt geworden, wobei oftmals das während des Ernteprozesses anfallende Stroh und gegebenenfalls die Spreu effektiv direkt als Dünger auf dem abgeernteten Feld genutzt wird. Dazu ist es erforderlich, dass das Stroh in entsprechend kleine Stücke gehäckselt wird, was durch einen hinlänglich bekannten und in den Mähdrescher eingebauten Strohhäcksler erfolgt. Das den Strohhäcksler verlassende Häckselgut und die Spreu können getrennt voneinander und/oder gemeinsam auf dem Feld verteilt werden. Um eine möglichst gleichmäßige Düngerwirkung zu erzielen, ist eine möglichst gleichmäßige Verteilung anzustreben.

Einen erheblichen Einflussfaktor auf die Qualität der Verteilung hat die Schneidwerksbreite, da die Verteilung des Häckselgutes und der Spreu über der gesamten Breite des Schneidwerks erfolgen soll, um eine Streifenbildung während des Erntevorgangs zu vermeiden.

Zur Realisierung einer möglichst gleichmäßigen Verteilung sind im Stand der Technik unterschiedliche Prinzipien bekannt geworden.

Beispielsweise sind sogenannte passive Verteilelemente bekannt geworden, bei denen Leitbleche eingesetzt werden, um den durch den Strohhäcksler beschleunigten Gutstrom auf die Schneidwerksbreite aufzuteilen. Dabei können die Leitbleche in gewissen Grenzen verstellbar vorgesehen sein und der Gutstrom kann in mehrere Teilströme aufgeteilt werden, um jedem der Teilströme eine entsprechend gewählte Vorzugsrichtung zu geben. Ein solcher Mähdrescher und ein entsprechendes Verfahren ist aus der EP 1 342 402 B1 bekannt geworden, wobei die dort vorgesehenen Führungsbleche verstellbar vorgesehen sind, um die einzelnen Teilströme wunschgemäß zu verteilen. Ein solches System funktioniert an sich zuverlässig und eignet sich zur gleichmäßigen Verteilung des Gutstroms. Nachteilig ist jedoch, dass durch die Aufteilung des Gutstroms und durch die Umlenkung des Gutstroms mittels der Leitbleche Reibung entsteht, die dem Gutstrom kinetische Energie entzieht und ihn somit abbremst. Um trotzdem auf entsprechende Verteilbreiten zu kommen, muss der Gutstrom mittels des Strohhäckslers und/oder einer zusätzlichen Gebläses mit entsprechend mehr Eingangsleistung beaufschlagt werden.

Weiterhin sind im Stand der Technik auch aktive Verteilelemente bekannt geworden. So ist mit der DE 199 08 111 C1 ein Mähdrescher mit einem Breitverteileraustrag für gehäckseltes Stroh-Spreu-Gemisch bekannt geworden. Bei diesem und ähnlichen Systemen wird der Gutstrom einem Verteilsystem zugeführt, welches rotierend angetriebene Verteil- und Förderelemente umfasst. Die schaufelartig ausgebildeten Förderelemente stehen radial von den rotierend angetriebenen Elementen ab und beschleunigen das zu fördernde Häckselgut. Es können verstellbare Abrisskantenbleche vorgesehen sein, mit denen die Verteilung des Gutes auf dem Feldboden beeinflussbar ist. Auch diese Systeme funktionieren grundsätzlich und können eine homogene Verteilung des Häckselguts auf dem Feld gewährleisten. Nachteilig an solchen Verteilsystemen ist jedoch, dass sie einen erhöhten konstruktiven und baulichen Aufwand bedingen und durch die aktive Förderung des Häckselguts einen erhöhten Antriebsenergieaufwand haben.

Gegenüber dem zuvor beschriebenen Stand der Technik ist es deshalb die Aufgabe der vorliegenden Erfindung einen Mähdrescher und ein Verfahren zum Ernten von Erntegut mit einem Mähdrescher zur Verfügung zu stellen, womit eine zuverlässige Verteilung von Häckselgut mit geringem Energieaufwand möglich ist.

Diese Aufgabe wird gelöst durch einen Mähdrescher mit den Merkmalen des Anspruchs 1. Das erfindungsgemäße Verfahren ist Gegenstand des Anspruchs 11. Bevorzugte Weiterbildungen und Ausgestaltungen der Erfindung sind Gegenstand der jeweiligen Unteransprüche. Weitere vorteilhafte Merkmale und Eigenschaften der Erfindung ergeben sich aus den Ausführungsbeispielen.

Der erfindungsgemäße Mähdrescher weist wenigstens eine Häckseleinrichtung für einen zu häckselnde Gutstrom auf und umfasst eine der Häckseleinrichtung nachgeschaltet Verteileinrichtung zur Verteilung des Gutstroms, Dabei umfasst die Verteileinrichtung wenigstens einen Rotationskörper, welcher derart strukturiert ist, dass bei Rotation des Rotationskörpers ein Magnus-Effekt erzeugt wird, welcher eine seitliche Ablenkung wenigstens eines Teil des Gutstroms bewirkt.

Der erfindungsgemäße Mähdrescher hat viele Vorteile. Ein erheblicher Vorteil des erfindungsgemäßen Mähdreschers ist, dass mit geringem konstruktiven Aufwand und geringem Energieeinsatz eine homogene Verteilung des Gutstroms möglich ist. Der Gutstrom kann auf dem Feld bzw. der Erntefläche im Wesentlichen homogen verteilt werden. Dabei ist bei der Verteilung des Gutstroms nur die Antriebsenergie für die Rotation des Rotationskörpers nötig, wobei der Rotationskörper den zu fördernden Gutstrom nicht aktiv transportieren muss.

Der mit einer Schneideinrichtung und insbesondere einem Schneidwerk zum Ernten des Erntegutes ausgerüstete Mähdrescher führt das durch das Schneidwerk geerntete Gut einer am Mähdrescher vorgesehenen Drescheinrichtung zu. Das zu häckselnde Häckselgut und/oder die Spreu werden der Häckseleinrichtung zugeführt, wo der Gutstrom zerkleinert und beschleunigt wird. Der gehäckselte Gutstrom wird der mit wenigstens einem Rotationskörper ausgerüsteten Verteileinrichtung zugeführt, an der durch die Rotation des Rotationskörpers eine gezielte seitliche Ablenkung wenigstens eines Teils der Gutstroms bewirkt wird.

Im Unterschied zu den bekannten passiven Leitsystemen mit Leitblechen, wird bei der Erfindung keine erhöhte Reibwirkung durch die Umlenkung des Gutstroms bewirkt. Insbesondere dem zu den Seiten hin umgelenkten Gutstrom wird keine kinetische Energie durch Reibung an einem Leitblech entzogen. Der Energieeinsatz ist geringer.

Ein erheblicher Vorteil gegenüber den bekannten aktiven Förderelementen, mit denen nicht nur eine Umlenkung, sondern auch eine aktive Förderung des gehäckselten Gutstroms bewirkt wird, besteht darin, dass durch den Einsatz der Verteileinrichtung mit dem Rotationskörper ein erheblicher Anteil an Antriebsenergie eingespart wird.

Im Unterschied zu den bekannten Verteileinrichtungen erfolgt bei dem erfindungsgemäßen Mähdrescher eine seitliche Ablenkung wenigstens eines Teils des Gutstroms über einen Magnus-Effekt. Ein Magnus-Effekt wird erzeugt, indem ein Rotationskörper oder eine rotierende Walze relativ gegenüber einem Fluid bewegt wird. Bei dem erfindungsgemäßen Mähdrescher bedeutet dies, dass in oder neben dem Gutstrom, der die Häckseleinrichtung verlässt ein rotierender Rotationskörper positioniert wird, der auf seiner Oberfläche aufgrund des dort herrschenden Reibungseffekt die den Rotationskörper umgebende Luft zur Rotation anregt. Das Resultat ist, dass die den rotierenden Rotationskörper umgebende Luft auf einer Seite sich auf den Gutstrom zu bewegt, während der Luftstrom auf der anderen Seite in die gleiche Richtung strömt wie der Gutstrom. Dadurch entstehen Druckunterschiede auf den beiden Seiten des Rotationskörpers, die eine Umlenkung wenigstens eines Teils des anströmenden Gutstroms bewirken. Auf der einen Seite der rotierenden Rotationskörpers entsteht ein Unterdruck und auf der anderen Seite der rotierenden Rotationskörpers entsteht ein Überdruck, sodass der Gutstrom von dem Rotationskörper um den Rotationskörper herum umgelenkt wird, sodass eine homogene Verteilung des Häckselguts über der Schneidbreite des Mähdreschers ermöglicht wird.

Mit der Erfindung wird ein konstruktiv und antriebstechnisch einfacher Aufbau ermöglicht, der ohne großen Energieaufwand angetrieben werden kann und womit die Flugrichtung des Gutstroms ohne aktive Einwirkung gezielt beeinflussbar ist.

In einer bevorzugten Weiterbildung der Erfindung sind wenigstens zwei Rotationskörper vorgesehen, deren Rotationsgeschwindigkeiten mit einer Steuereinrichtung insbesondere separat steuerbar sind. Mit zwei Rotationskörper ist der Umlenkungseffekt verstärkbar. Beispielsweise können beide Rotationskörper in unterschiedliche Drehrichtungen rotieren, um das Häckselgut aus dem Gutstrom in unterschiedliche Teilströme aufzuteilen, die auf diese Art und Weise über die gesamte Breite des Schneidwerks das Häckselgut verteilen.

Besonders bevorzugt ist die Oberfläche des Rotationskörpers wenigstens im Wesentlichen frei von Mitnehmern für den Gutstrom. Insbesondere sind keine abstehenden Teile an der Oberfläche dem Rotationskörper vorgesehen, Da keine Transport- oder Förderelemente oder Transportflügel oder dergleichen radial von dem Rotationskörper abstehen, greift der Rotationskörper nicht aktiv durch eine fördernde Umlenkung in den Gutstrom ein, sondern bewirkt über die sich um den Rotationskörper ergebende Luftströmung eine Ab- bzw. Umlenkung des Gutstroms.

Vorzugsweise ist wenigstens ein Rotationskörper als rotierbare Zylindereinrichtung ausgeführt.

In besonders bevorzugten Weiterbildungen der Erfindung ist die Oberfläche des Rotationskörpers im Wesentlichen glatt ausgebildet. Dabei kann die Oberfläche des Rotationskörpers aber wellenförmig gestaltet sein oder eine Art von Noppenstruktur aufweisen, um eine stärkere Strömung um den Rotationskörper selbst zu erzeugen.

Mit dem Begriff noppenstruktur" ist insbesondere eine Oberflächenstruktur gemeint, wie sie beispielsweise Golfbälle aufweisen. Golfbälle besitzen viele kleine Vertiefungen auf der Oberfläche, sogenannte "Dimpels". Die Dimpels verbessern als Turbolatoren das Anhaften der am Ball anliegenden und durch seine Rotation mitgeführten Grenzschicht. Solche wellenförmige Strukturen oder noppenartigen Oberflächen mit insbesondere nach innen weisenden Noppen oder Vertiefungen sind besonders bevorzugt zur Ausgestaltung der Oberfläche der rotierbaren Zylindereinrichtung. Die Oberfläche ist vorzugsweise so beschaffen, dass die Luftströmung optimal in Rotation versetzt wird. Dazu können neben einer relativ glatten Ausbildung der Oberfläche auch strömungstechnisch raue Oberflächen eingesetzt werden. Mit solchen Oberflächenstrukturen wird die Effektivität und Wirksamkeit des Rotationskörpers oder der rotierbaren Zylindereinrichtung erheblich verstärkt, ohne dass ein aktiver Eingriff in den Gutstrom aus Häckselgut erforderlich ist.

Möglich ist auch ein von der idealen Kreisform abweichender Rotationskörper. Neben Rotationskörpern mit zylindrischen Querschnitten können auch dreieckige, vier- oder mehreckige Rotationskörper mit z.B. abgerundeten Ecken eingesetzt werden. Bevorzugt ist auch der Einsatz von pyramidenförmigen, kegelförmigen, balligen oder insbesondere auch elliptischen Rotationskörpern. Gegebenenfalls können auch zur Erhöhung der Strömungsgeschwindigkeit Oberflächenrauigkeiten oder dergleichen vorgesehen sein.

In bevorzugten Weiterbildungen kann ein Querschnitt der Verteileinrichtung sich in Förderrichtung verjüngen. Das bedeutet, dass der Einlaufabschnitt der Verteileinrichtung einen kleineren Querschnitt aufweist als der Auslaufabschnitt, an dem insbesondere wenigstens ein und insbesondere wenigstens zwei Rotationskörper vorgesehen sind.

Zur gezielten Steuerung der seitlichen Ablenkung des Gutstroms ist vorzugsweise wenigstens ein Rotationskörper in der Ebene senkrecht zu seiner Drehachse verstellbar angeordnet. Insbesondere ist wenigstens ein Rotationskörper verschwenkbar vorgesehen, um durch eine Verschiebung oder Verschwenkung des Rotationskörpers die Abführrichtung wenigstens eines Teils des Gutstroms des Häckselguts gezielt zu beeinflussen. Insbesondere ist zur Verschwenkung des Rotationskörpers ein Schwenkarm vorgesehen.

In allen Ausgestaltungen und Weiterbildungen des erfindungsgemäße Mähdreschers ist vorzugsweise eine Umfangsgeschwindigkeit wenigstens eines Rotationskörpers wenigstens 50 % größer als eine Fördergeschwindigkeit des Gutstroms. Insbesondere ist wenigstens eine Umfangsgeschwindigkeit wenigstens eines Rotationskörpers wenigstens doppelt so groß als die Fördergeschwindigkeit des Gutstroms. Das bedeutet, dass der lokale Strömungsgeschwindigkeitsunterschied des Gutstroms und der Umfangsgeschwindigkeit zwischen etwa der einfachen Geschwindigkeit des Gutstroms und wenigstens etwa der dreifachen der Fördergeschwindigkeit des Gutstroms beträgt. Möglich sind auch um ein Vielfaches größere Fördergeschwindigkeiten. Die Fördergeschwindigkeit des Gutstroms kann insbesondere auch von den Eigenschaften des Häckselgutes und/oder von den Umgebungsbedingungen abhängen.

Vorzugsweise ist eine Lage der Rotationsachsen der Rotationskörper einstellbar. Möglich und bevorzugt ist auch eine Einstellbarkeit im Betrieb, um die Lage der Rotationsachsen an die aktuellen Bedingungen anpassen zu können. Wird das obere Ende der Rotationskörper zu dem Ende des Mähdreschers hin geneigt, kann die Wurfweite des Häckselguts erhöht werde. Umgekehrt kann die Wurfweite verringert werden, wenn der Gutstrom nicht horizontal, sondern nach unten in Richtung auf die Stoppeln gerichtet befördert wird. Auf diese Art und Weise kann eine Anpassung der aktuellen Wurfweite erfolgen. Es ist eine Neigung in Längs- und/oder in Querrichtung des Mähdreschers möglich. Eine in einer Querebene gelegene und zur Vertikalen geneigte Drehachse bewirkt eine erhöhte Abwurfweite in Querrichtung, was z.B. bei Seitenwind sinnvoll sein kann.

In allen Ausgestaltungen ist es bevorzugt, dass wenigstens ein Sensor vorgesehen ist, der zur Erfassung der Windrichtung und/oder der Windgeschwindigkeit und/oder der Bodenneigung vorgesehen ist. Über wenigstens einen Sensor oder wenigstens einer Sensoreinrichtung zur Erfassung wenigstens einer solchen Sensorgröße kann die Verteilung des Häckselguts besonders effektiv bewirkt werden, da je nach lokal vorherrschenden Bedingungen die Rotationsgeschwindigkeit des Rotationskörpers und/oder die Position und/oder der Winkel des Rotationskörpers an die vorherrschenden Bedingungen angepasst werden kann.

Wenn beispielsweise der Wind auf eine Seite des Mähdreschers dreht, wird die Verteilung des gehäckselten Ernteguts auf die gegenüberliegende Seite begünstigt, sodass durch eine entsprechende Anpassung der Rotationsgeschwindigkeiten der Rotationskörper die Verkeilung wieder homogenisiert werden kann,

Das erfindungsgemäße Verfahren dient zum Ernten von Erntegut mit einem Mähdrescher, wobei wenigstens ein Teil des Ernteguts gehäckselt und der gehäckselte Gutstrom anschließend verteilt wird. Die Verteilung des Gutstroms wird mit wenigstens einem Rotationskörper unterstützt, wobei durch dessen Rotation ein Magnus-Effekt erzeugt wird, wodurch wenigstens einen Teil des Gutstroms seitlich abgelenkt wird.

Auch das erfindungsgemäße Verfahren hat viele Vorteil. Mit dem Verfahren wird es über den Einsatz von z.B. einfach strukturierten rotierenden Zylindereinrichtungen oder anderen Rotationskörpern möglich, den Gutstrom des gehäckselten Ernteguts zuverlässig und gleichmäßig über der Schnittbreite des Mähdreschers zu verteilten.

In bevorzugten Weiterbildungen wird die Drehrichtung wenigstens eines Rotationskörpers periodisch geändert, um eine effektive und gleichmäßige Verteilung des gehäckselten Ernteguts zu ermöglichen.

Insbesondere ist es bevorzugt, dass neben der Drehrichtung oder anstatt der Drehrichtung die Drehgeschwindigkeit gesteuert wird. Dabei können mehrere Rotationskörper separat und unabhängig voneinander gesteuert werden, sodass beispielsweise die Rotationsgeschwindigkeit eines Rotationskörpers erhöht wird, während die Rotationsgeschwindigkeit eines anderen Rotationskörpers verringert wird. Es ist auch möglich, dass die Drehrichtungen unterschiedlicher Rotationskörper unabhängig voneinander geändert werden, um eine flexible und homogene Verteilung des gehäckselten Ernteguts zu ermöglichen.

Zur besseren Steuerung kann die Windrichtung, Windgeschwindigkeit und/oder die Bodenneigung sensorisch erfasst werden. Weiterhin ist es bevorzugt, dass die Fahrgeschwindigkeit und/oder die Fahrtrichtung des Mähdreschers erfasst wird, um die Parameter bei der Steuerung der Rotationskörper zu berücksichtigen.

In allen Verfahrensvarianten ist es möglich, dass wenigstens ein Rotationskörper zur Steuerung der Verteilung des gehäckselten Ernteguts bewegt und insbesondere verschwenkt wird.

An dieser Stelle sei darauf hingewiesen, dass sich die Anmelderin vorbehält, eine Verteileinrichtung für einen Mähdrescher zur Verteilung des Gutstroms separat zu beanspruchen, wobei die Verteileinrichtung einen Einlass und wenigstens einen Auslass aufweist und wobei wenigstens ein Rotationskörper oder wenigstens eine rotierbare Zylindereinrichtung vorgesehen ist, welcher oder welche derart strukturiert ist, dass bei Rotation des Rotationskörpers oder der Zylindereinrichtung ein Magnus-Effekt erzeugt wird, wodurch eine seitliche Ablenkung des Förderstroms des Gutstroms bewirkbar ist.

Weitere Vorteile und Merkmale der vorliegenden Erfindung ergeben sich aus der Beschreibung der nachfolgenden Ausführungsbeispiele mit Bezug auf die beiliegenden Figuren.

In den beiliegenden Figuren zeigen:
- Fig. 1:: eine Seitenansicht des erfindungsgemäßen Mähdreschers:
- Fig. 2:: eine schematische Aufsicht auf eine Verteileinrichtung des Mähdreschers nach Fig. 1;
- Fig. 3a:: eine Seitenansicht der Verteileinrichtung nach Fig. 2 in einer horizontalen Abwurfstellung;
- Fig. 3b:: eine Seitenansicht der Verteileinrichtung nach Fig. 2 in einer geneigten Abwurfstellung zur Erhöhung der Wurfweite;
- Fig. 4:: eine Rückansicht der Verteileinrichtung nach Fig. 2;
- Fig. 5:: eine schematische Aufsicht auf die Verteileinrichtung nach Fig. 1 in einer Betriebseinstellung;
- Fig. 6:: eine modifizierte Verteileinrichtung für den Mähdrescher nach Fig. 1 in einer schematisierten Aufsicht;
- Fig. 7:: eine weitere Verteileinrichtung für den Mähdrescher nach Fig. 1 in einer ersten Betriebsposition; und
- Fig. 8:: eine weitere Ausführungsform einer Verteileinrichtung für den Mähdrescher nach Fig. 1 in einer schematischen Aufsicht.

Mit Bezug auf die beiliegenden Figuren wird im Folgenden ein Ausführungsbeispiel eines erfindungsgemäßen Mähdreschers 1 mit unterschiedlichen Verteileinrichtungen 38 beschrieben.

Die Erfindung wird nachfolgend anhand eines Mähdreschers 1 dargestellt. Dabei wird der dem Fachmann hinlänglich bekannte Mähdrescher 1 nicht in allen Einzelheiten vollständig erläutert, sondern im Wesentlichen nur so weit beschrieben, als es zum Verständnis der Erfindung notwendig ist.

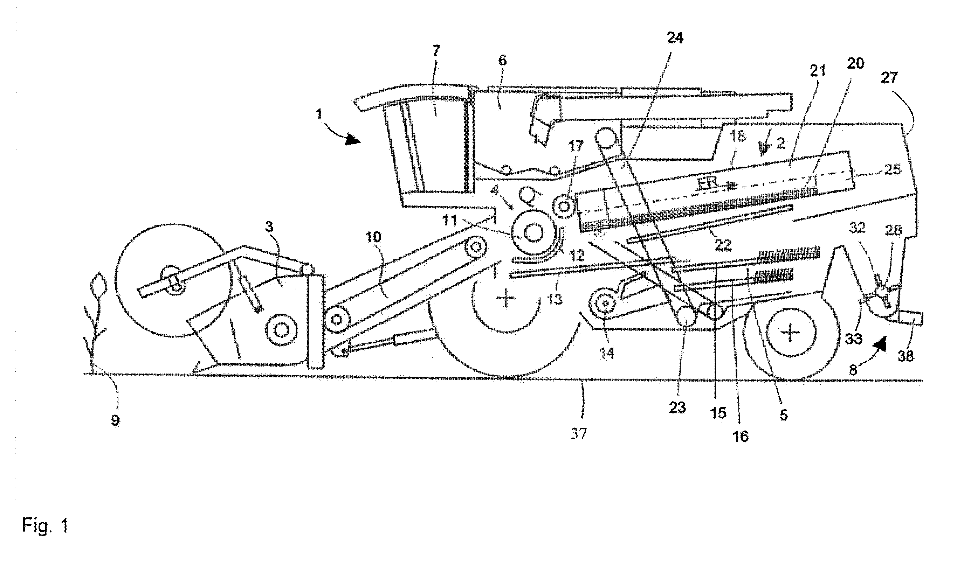

Der in der Fig. 1 schematisch dargestellte Mähdrescher 1 mit einem Axialabscheider 2 umfasst ein Schneidwerk 3, eine Drescheinrichtung 4, eine Reinigungseinrichtung 5, einen Korntank 6, eine Fahrerkabine 7 und einen dem Axialabscheider 2 nachgeordneten Strohhäcksler 8.

Das vom Schneidwerk 3 abgeschnittene Erntegut 9 gelangt über einen Schrägförderkanal 10 zu einer nach dem Tangentialprinzip arbeitenden Drescheinrichtung 4. Diese besteht aus einer Dreschtrommel 11 und einem zugeordneten Dreschkorb 12. Die am Dreschkorb 12 abgeschiedenen Erntegutbestandteile werden über einen Förderboden 13 zu einer aus einem Gebläse 14 und einem Ober- und Untersieb 15,16 bestehenden Reinigungseinrichtung 5 geleitet.

Das den Dreschkorb 12 in tangentialer Richtung verlassende Korn-Kurzstroh-Gemisch wird in einen Axialabscheider 2 gefördert. Der Fördervorgang wird durch eine parallel zur Dreschtrommel 11 angeordnete, rotierende Wendetrommel 17 unterstützt.

Der Axialabscheider 2 ist in Längsrichtung des Mähdreschers 1 angeordnet und besteht im Wesentlichen aus einem feststehenden, in Förderrichtung FR ansteigenden zylindrischem Gehäuse 18, in dem ein drehbar angetriebener Rotor gelagert ist.

Das Gehäuse 18 weist einen unteren Bereich mit Abscheiderosten 20 und einem geschlossenen oberen Deckbereich 21 mit an der Innenseite angeordneten Leiteinrichtungen zur Unterstützung der Förderbewegung des Erntegutes auf. Der Umfangsbereich des Rotors ist mit verschiedenartig ausgebildeten Zinken oder Leisten versehen, die den Abscheidevorgang intensivieren.

An den Abscheiderosten 20 werden die im Erntegutgemisch enthaltenen Körner sowie Anteile von Kurzstroh und Spreu abgeschieden und über den darunter liegenden Rücklaufboden 22 zur Reinigungseinrichtung 5 gefördert. Die gereinigten Körner gelangen über eine Förderschnecke 23 und einen Elevator 24 in den Korntank 6.

Innerhalb des Axialabscheiders 2 wird das Stroh in Richtung zum Abgabebereich 25 gefördert und gelangt von dort aus über die Auslassbreite verteilt in eine als Strohhäcksler 8 ausgeführte Häckseleinrichtung. Der Strohhäcksler 8 ist quer zur Fahrtrichtung an einem Rahmen unterhalb der Strohauslaufhaube 27. Die Auslassbreite des Axialabscheiders 2 entspricht etwa dem Durchmesser des Gehäuses 18 des Axialabscheiders 2.

Die drehbar angetriebene Welle 28 des Strohhäckslers 8 ist in Lagern an den Seitenwänden gelagert. An der Welle 28 sind Halterungen angebracht, an denen jeweils paarweise Messer 32 pendelnd befestigt sind.

Diese Messer 32 wirken mit feststehenden Gegenmessern 33 zusammen. Dem Strohhäcksler 8 ist in der Abwurfrichtung eine Verteileinrichtung 38 für das gehäckselte Stroh auf dem Feld zugeordnet.

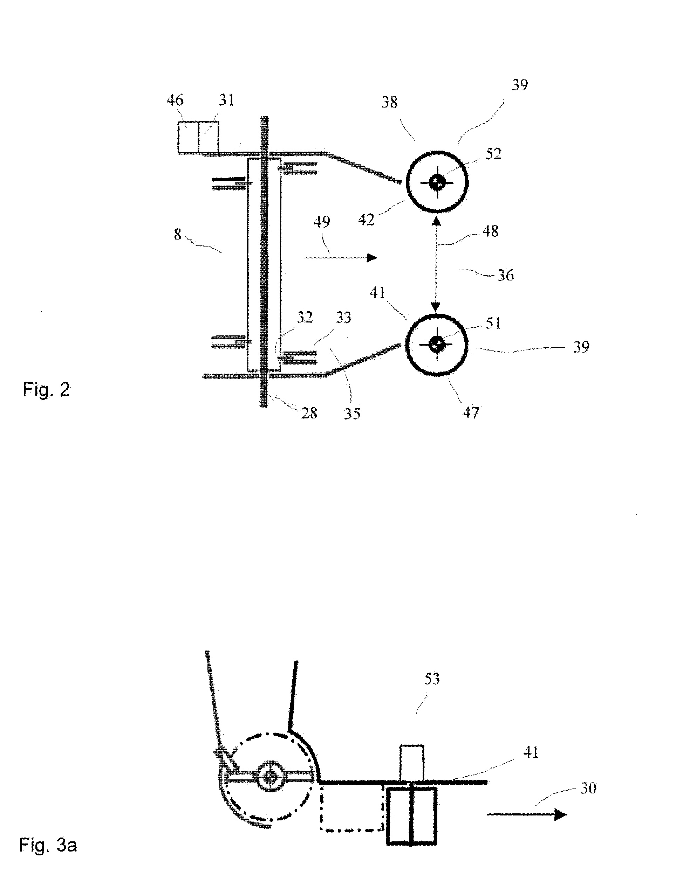

In Figur 2 ist eine schematische Aufsicht einer Verteileinrichtung 38 des Mähdreschers nach Fig. 1 abgebildet. Die Verteileinrichtung 38 ist der als Strohhäcksler 8 ausgeführten Häckseleinrichtung nachgeschaltet. Die Häckseleinrichtung mit den um die Welle 28 des Strohhäcksters 8 rotierenden Messern 32 häckselt den Gutstrom 40 und transportiert den Gutstrom 40 in die Förderrichtung 49 und somit in den Einlaufabschnitt 35 der Verteileinrichtung 38. Der Einlaufabschnitt 35 der Verteileinrichtung 38 weist einen größeren Querschnitt auf als der Querschnitt 48 des Auslaufabschnitts 36 der Verteileinrichtung 38.

Die Verteileinrichtung 38 umfasst hier zwei als Zylindereinrichtungen 41 und 42 ausgeführte Rotationskörper 39, die an den Seiten des Auslaufabschnitts 36 angeordnet und um die jeweiligen Drehachsen 51 und 52 drehbar angeordnet sind. Hier dient ein Motor 53 zum Antrieb der Rotationskörper 39 bzw. der Zylindereinrichtungen 41 und 42. In anderen Ausgestaltungen ist auch der Einsatz von anderen Rotationskörper 39 möglich, die z.B. elliptisch oder mehreckig ausgestaltet sind.
Die Steuereinrichtung 46 dient zur Steuerung. Ein Sensor 31 oder mehrere Sensoren 31 können zur Erfassung der aktuellen Umgebungsbedingungen und der Betriebsbedingungen vorgesehen sein und bei der Steuerung verwendet werden.

Fig. 3a zeigt eine schematische Seitenansicht der Verteileinrichtung 38 des Mähdreschers 1 nach Fig. 1. Die um etwa vertikale Achsen rotierenden Rotationskörper 39 bzw. Zylindereinrichtungen 41 und 42 lenken das Häckselgut in die hier horizontal ausgerichtete Abwurfrichtung bzw. Austrittsrichtung 30.

Zur Erhöhung bzw. Einstellung der Wurfweite kann die Ausrichtung der Drehachsen 51 und 52 der Rotationskörper 39 einstellbar sein. Vorzugsweise ist die Lage wenigstens einer Drehachse 51 bzw. 52 während des Betriebs veränderbar und kann insbesondere an die jeweils aktuellen Bedingungen angepasst werden.

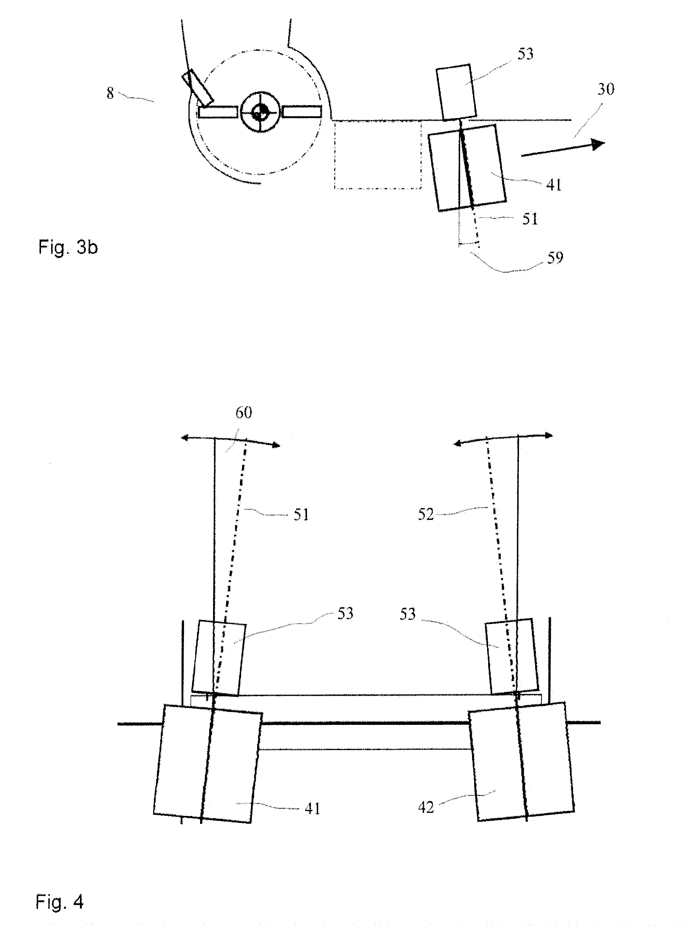

In Fig. 3b ist eine weitere schematische Seitenansicht der Verteileinrichtung 38 des Mähdreschers 1 nach Fig. 1 dargestellt, wobei in der Darstellung nach Fig. 3b die Rotationsachsen bzw. Drehachsen 51, 52 der Zylindereinrichtungen 41, 42 zur Vertikalen um einen Winkel 59 geneigt angeordnet sind. Dadurch ändert sich die Austrittsrichtung 30 und der Gutstrom 40 weist eine nach oben gerichtete Vektorkomponente auf, sodass die Abwurfweite vergrößert wird.

Bei einer entgegengesetzten bzw. negativen Neigung der Drehachsen 51, 52 würde der Gutstrom 40 nach unten in die Stoppel gelenkt, sodass die Abwurfweite verkürzt würde. Das kann z.B. bei Seitenwind oder an einer Hanglage sinnvoll oder gewünscht sein.

Fig. 4 zeigt eine stark schematisierte Rückansicht des Mähdreschers 1. Fig. 4 zeigt, dass die Einstellung der Lage der Drehachsen 51, 52 der Zylindereinrichtungen 41, 42 nicht nur in der Längsrichtung des Mähdreschers 1, sondern auch in der Richtung quer dazu möglich und bevorzugt ist. Hier ist ein Winkel 60 zur Vertikalen vorgesehen.

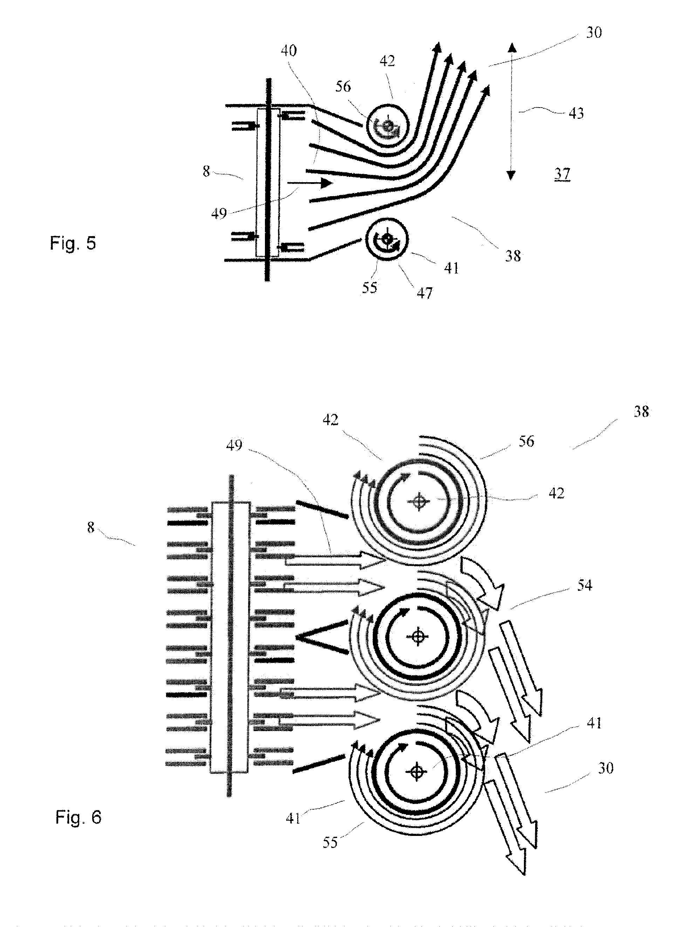

In Figur 5 ist eine Betriebseinstellung der Verteileinrichtung 38 aus Fig. 2 dargestellte, Die in Fig. 5 dargestellte schematische Aufsicht auf die Verteileinrichtung 38 nach Fig. 2 lenkt den Gutstrom 40 in der Förderrichtung 49 gesehen nach links um. Das wird hier dadurch erzielt, dass beide Zylindereinrichtungen 41 und 42 in der Aufsicht gesehen entgegen des Uhrzeigersinns rotieren. Da der lokale Strömungsvektor im Bereich des Auftreffpunktes des Gutstroms 40 und der Strömungsvektor der rotierenden Luft an der Oberfläche 47 der Zylindereinrichtung 42 gleich gerichtet sind, entsteht dort lokal ein Unterdruck, der zu einer Umlenkung des Gutstroms 40 um die Zylindereinrichtung 42 herum führt. Gleichzeitig ist der Strömungsvektor am Auftreffpunkt des Gutstroms 40 auf die Zylindereinrichtung 41 und der Strömungsvektor der um die Zylindereinrichtung 41 herum strömenden Luftströmung entgegengesetzt gerichtet, sodass dort ein lokaler Überdruck entsteht, der ebenfalls zu einer Umlenkung des Gutstroms 40 um die Zylindereinrichtung 42 herum führt.

Insgesamt wird in der in Fig. 5 gezeigten Betriebseinstellung der Gutstrom 40 in Förderrichtung 49 des Gutstroms 40 betrachtet nach links umgelenkt. Die seitliche Ablenkung 43 reicht aus, um die gesamte Schnittbreite des Mähdreschers 1 abzudecken.

Die Verteileinrichtung 38 gemäß Fig. 5 könnte auch in eine andere Betriebseinstellung gebracht werden. Beispielsweise können die Drehrichtungen 55 und 56 der Zylindereinrichtungen 41 und 42 entgegengesetzt zu den jeweiligen Drehrichtungen in Fig. 4 ausgerichtet werden. Dadurch würde eine umgekehrte seitliche Ablenkung 43 erzeugt, wodurch der Gutstrom 40 nun in Förderrichtung 49 betrachtet nach rechts abgelenkt würde.

Damit ist exemplarisch gezeigt, dass durch eine gewünschte Einstellung der Drehrichtungen 55 und 56 und eine gegebenenfalls entsprechend erfolgende Einstellung der Drehgeschwindigkeiten der Gutstrom 40 in eine gewünschte Austrittsrichtung 30 gelenkt werden kann.

Bei Bedarf können die Drehrichtungen 55 und 56 alternierend gewählt werden, sodass der Gutstrom 40 entlang der Förderrichtung gesehen periodisch nach links und nach rechts abgelenkt wird.

In Fig. 6 ist ein weiteres Ausführungsbeispiel dargestellt. Die in Fig. 6 dargestellte Ausführungsform weist einen Strohhäcksler 8 mit einer Vielzahl von Messern auf, die den Gutstrom 40 effektiv zerkleinern und in die Förderrichtung 49 transportieren. In Abweichung zu den vorangegangenen Ausführungsbeispielen sind hier drei als Zylindereinrichtungen 41, 42 und 54 ausgeführte Rotationskörper 39 vorgesehen, wobei die dritte Zylindereinrichtung 54 hier mittig zwischen den beiden anderen Zylindereinrichtungen 41 und 42 vorgesehen ist.

Durch eine mittels der Steuereinrichtung 46 (vgl. Fig. 2) erfolgende separate Steuerung der drei Zylindereinrichtungen 41, 42 und 54 können unterschiedliche Teilströme des Gutstroms 40 separat abgelenkt werden.

Werden alle drei Zylindereinrichtungen 41, 42 und 54 mit der in Fig. 6 dargestellten gleichgerichteten Drehrichtung im Uhrzeigersinn beaufschlagt, wird der gesamte Gutstrom 40 in die Austrittsrichtung 30 umgelenkt, welche hier in Förderrichtung 49 gesehen nach rechts umgelenkt wird.

Durch gegenläufige Drehrichtungen 55 und 56 einzelner Zylindereinrichtungen 41, 42 und 54 ist auch eine Aufteilung des Gutstroms 40 in zwei unterschiedlich abgelenkte Teilströme möglich.

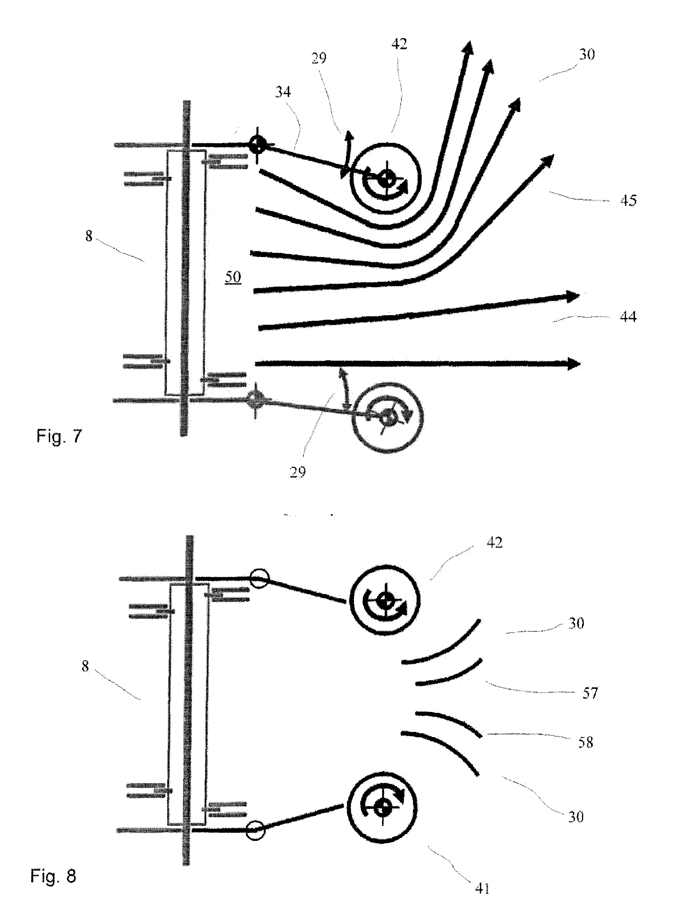

In den Fig. 7 und 8 sind zwei weitere Verteileinrichtungen 38 in zwei unterschiedlichen Betriebspositionen in jeweils einer stark schematischen Aufsicht dargestellt.

Dabei sind die beiden drehbaren Zylindereinrichtungen 41 und 42 an jeweils einem Schwenkarm 34 verschwenkbar aufgenommen, sodass die Betriebsposition der jeweiligen Zylindereinrichtungen 41 und 42 veränderbar ist. Durch eine Verschwenkung des Schwenkarms 34 in der Ebene 50 wird der Schwenkwinkel 29 beeinflusst, wodurch insbesondere in Verbindung mit der Drehgeschwindigkeit und der Drehrichtung 55 bzw. 56 der Zylindereinrichtungen 41 und 42 eine besonders flexible Ablenkung des Gutstroms 40 ermöglicht wird.

Insbesondere in Verbindung mit einem Sensor 31 oder mehreren Sensoren 31 (vgl. Fig. 2) kann mit der in Fig. 2 dargestellten Steuereinrichtung 46 eine besonders effektive Steuerung des Gutstroms 40 erfolgen, der in nahezu beliebige Austrittsrichtungen 30 umlenkbar ist.

Durch entsprechende Positionen der Zylindereinrichtungen 41 und 42 kann eine gleichmäßige Verteilung in mehrere Teilströme 44 und 45 erfolgen, die in unterschiedliche Austrittsrichtungen 30 gerichtet sind.

In Fig. 8 sind zusätzlich noch Leitbleche 57, 58 in einem mittleren Bereich eingezeichnet, welche eine Umlenkung des mittleren Gutstroms bewirken, um eine homogene Verteilung auch in dem mittleren Bereich einfach zu gewährleisten. Da die Umlenkungswinkel gering sind, wird die Geschwindigkeit nur wenig gebremst. Außerdem spielt in dem mittleren Bereich die Strömungsgeschwindigkeit keine besondere Rolle, da eine besonders große Wurfweite dort in der Regel nicht gefordert wird.

Durch eine Berücksichtigung der jeweils vorliegenden Erntebedingungen und insbesondere der Windrichtung, der Feldbodenneigung, sowie der Erntegutfeuchte und auch des seitlichen Erntegutbestands etc. kann eine flexible und optimal auf die vorliegenden Bedingungen ausgerichtete Steuerung der Verteileinrichtung 38 und des gesamten Mähdreschers 1 erfolgen, Dabei können insbesondere auch die Fahrtrichtung und die Fahrgeschwindigkeit des Mähdreschers 1 berücksichtigt werden.

Ein erheblicher Vorteil gegenüber einfachen Leitblechverteilern ist, dass bei Leitblechverteilern der Geschwindigkeitsverlust um so größer ist, je weiter das Gut zur Seite zur Erzielung einer großen Verteilbreite abgelenkt werden muss. Dieser Nachteil entsteht bei der vorliegenden Erfindung nicht, da die Ablenkung zur Seite hin nicht über einen reibenden Kontakt mit einem Leitblech erfolgt.

Mit der Erfindung lässt sich eine hohe Verteilbreite bei gleichmäßiger Häckselgutverteilung mit einem relativ geringen baulichen Aufwand erzielen. Insbesondere auch in der mittleren und unteren Leistungsklasse lässt sich eine homogene und reproduzierbare Verteilung erreichen, wobei die Kosten für die Verteileinrichtung 38 geringer sind als bei einer bekannten aktiven Verteilung.

Durch die Drehbewegung der Rotationskörper in Form von z.B. Zylindereinrichtungen wird ein rotierendes Luftströmfeld um diese herum erzeugt. Durch die Überlagerung des rotierenden Strömungsfelds mit dem linearen Strömungsfeld der mit Häckselgutteilchen beladenen Luft aus dem Häcksler wird eine gezielte seitliche Ablenkung erreicht.

Durch die unterschiedlichen Drehrichtungen bedingt werden unterschiedliche statische Drücke auf den beiden Seiten der Rotationskörper erzeugt, wodurch eine gezielte Ablenkung des Gutstroms 40 erfolgt.

Durch den Einsatz von zwei, drei, vier oder mehr rotierenden Rotationskörpern kann eine besonders feine Verteilung des Gutstromes bewirkt werden. Dabei ist auch eine alternierende Bewegung des Gutstroms durch einen Drehzahlwechsel rechts - links möglich.

Möglich ist auch eine Kombination von Rotationskörpern 39 oder rotierenden Zylindereinrichtungen 41, 42 unter gleichzeitigem Einsatz von Leitblechen, wobei die Leitbleche dann vorzugsweise eine Querschnittsverringerung in Richtung auf den Auslaufabschnitt 36 bewirken, an dem vorzugsweise die Zylindereinrichtungen 41, 42 vorgesehen sind, um dort eine entsprechend gewünschte Ablenkung des Gutstroms 40 zu bewirken.

Bei verschwenkbar angeordneten Rotationskörpern 39 oder Zylindereinrichtungen 41, 42 kann eine Änderung bzw. ein Wechsel der Wurfrichtung nicht nur durch eine Änderung der Drehrichtung 54, 55, 56 erzeugt werden, sondern auch durch eine seitliche Verschwenkung bzw. durch ein Ein- bzw. Ausschwenken der Rotationskörper 39 in den Gutstrom 40 hinein.

Insgesamt stellt die Erfindung einen Mähdrescher und ein Verfahren zum Verteilen eines Häckselguts zur Verfügung, wobei mit einfachen Mitteln ohne großen Energieaufwand eine wirksame und homogene Verteilung eines Häckselguts auf dem Feld 37 ermöglicht wird.

### Bezugszeichenliste:

- 1: Mähdrescher
- 2: Axialabscheider
- 3: Schneidwerk
- 4: Drescheinrichtung
- 5: Reinigungseinrichtung
- 6: Korntank
- 7: Fahrerkabine
- 8: Strohhäcksler
- 9: Erntegut
- 10: Schrägförderkanal
- 11: Dreschtrommel
- 12: Dreschkorb
- 13: Förderboden
- 14: Gebläse
- 15: Obersieb
- 16: Untersieb
- 17: Wendetrommel
- 18: Gehäuse
- 20: Abscheidroste
- 21: Deckbereich
- 22: Rücklaufboden
- 23: Förderschnecke
- 24: Elevator
- 25: Abgabebereich
- 27: Strohauslaufhaube
- 28: Welle
- 29: Schwenkwinkel
- 30: Austrittsrichtung
- 31: Sensor
- 32: Messer
- 33: Gegenmesser
- 34: Schwenkarm
- 35: Einlaufabschnitt
- 36: Auslaufabschnitt
- 37: Feld
- 38: Verteileinrichtung
- 39: Rotationskörper
- 40: Gutstrom
- 41: Zylindereinrichtung
- 42: Zylindereinrichtung
- 43: Seitliche Ablenkung
- 44: Teil
- 45: Teil
- 46: Steuereinrichtung
- 47: Oberfläche
- 48: Querschnitt
- 49: Förderrichtung
- 50: Ebene
- 51: Drehachse
- 52: Drehachse
- 53: Motor
- 54: Zylindereinrichtung
- 55: Drehrichtung
- 56: Drehrichtung
- 57: Leitblech
- 58: Leitblech
- 59: Winkel
- 60: Winkel

## Patentansprüche

1. Mähdrescher (1) mit wenigstens einer Häckseleinrichtung (8) für einen zu häckselnden Gutstrom (40) und mit einer der Häckseleinrichtung (8) nachgeschalteten Verteileinrichtung (38) zur Verteilung des Gutstroms (40),
**dadurch gekennzeichnet,**
**dass** die Verteileinrichtung (38) wenigstens einen Rotationskörper (39; 41, 42) umfasst, welche derart strukturiert ist, dass bei Rotation des Rotationskörpers (39; 41, 42) ein Magnus-Effekt erzeugt wird, welcher eine seitliche Ablenkung (43) wenigstens eines Teils (44, 45) des Gutstroms (40) bewirkt.

2. Mähdrescher (1) nach Anspruch 1, **dadurch gekennzeichnet, dass** wenigstens zwei Rotationskörper (39; 41, 42) vorgesehen sind, deren Rotationsgeschwindigkeiten mit einer Steuereinrichtung (46) insbesondere separat steuerbar sind.

3. Mähdrescher (1) nach Anspruch 1 oder 2, **dadurch gekennzeichnet, dass** die Oberfläche (47) frei von Mitnehmern für den Gutstrom (40) ist und/oder dass die Oberfläche (47) des Rotationskörpers (39; 41, 42) frei von abstehenden Teilen ist.

4. Mähdrescher (1) nach einem der vorangehenden Ansprüche, **dadurch gekennzeichnet, dass** die Oberfläche (47) des Rotationskörpers (39; 41, 42) glatt ausgebildet ist.

5. Mähdrescher (1) nach einem der vorangehenden Ansprüche, **dadurch gekennzeichnet, dass** die Oberfläche (47) des Rotationskörpers (39; 41, 42) wellenförmig gestaltet und insbesondere genoppt ist.

6. Mähdrescher (1) nach einem der vorangehenden Ansprüche, **dadurch gekennzeichnet, dass** eine Neigung einer Drehachse (51, 52) des Rotationskörpers (39; 41, 42) einstellbar ist.

7. Mähdrescher (1) nach einem der vorangehenden Ansprüche, **dadurch gekennzeichnet, dass** wenigstens ein Rotationskörper (39; 41, 42) in der Ebene (50) im Wesentlichen senkrecht zu seiner Drehachse (51, 52) verstellbar und insbesondere verschwenkbar vorgesehen ist.

8. Mähdrescher (1) nach einem der vorangehenden Ansprüche, **dadurch gekennzeichnet, dass** eine Umfangsgeschwindigkeit wenigstens einer rotierbaren Zylindereinrichtung wenigstens 50% größer als eine Fördergeschwindigkeit des Gutstroms (40) ist, wobei vorzugsweise die Umfangsgeschwindigkeit wenigstens eines Rotationskörpers (39; 41, 42) wenigstens das Zweifache der Fördergeschwindigkeit des Gutstroms (40) beträgt.

9. Mähdrescher (1) nach einem der vorangehenden Ansprüche, wobei wenigstens ein Sensor (31) zur Erfassung der Windrichtung und/oder Windgeschwindigkeit und/oder Bodenneigung vorgesehen ist.

10. Mähdrescher (1) nach einem der vorangehenden Ansprüche, **dadurch gekennzeichnet, dass** ein Neigungswinkel (59, 60) einer Drehachse (51, 52) des Rotationskörpers (39; 41, 42) in Abhängigkeit von erfassten Sensorgrößen einstellbar ist, um eine Abwurfweite des Gutstroms (40) zu beeinflussen und wahlweise insbesondere zu verringern oder zu vergrößern.

11. Verfahren zum Ernten von Erntegut mit einem Mähdrescher, bei dem wenigstens ein Teil des Ernteguts (9) gehäckselt und der gehäckselte Gutstrom (40) anschließend verteilt wird,
**dadurch gekennzeichnet,**
**dass** die Verteilung des Gutstroms (40) mit wenigstens einem Rotationskörper (39; 41, 42) unterstützt wird, welche durch ihre Rotation einen Magnus-Effekt erzeugen, wodurch wenigstens ein Teil des Gutstroms (40) seitlich abgelenkt wird.

12. Verfahren nach Anspruch 11, wobei die Drehrichtung (55, 56) wenigstens eines Rotationskörper (39; 41, 42) periodisch geändert wird.

13. Verfahren nach Anspruch 11 oder 12, wobei die Drehrichtung (55, 56) und/oder die Drehgeschwindigkeit gesteuert werden.

14. Verfahren nach einem der vorangehenden Ansprüche 11 bis 13, wobei die Windrichtung und/oder die Bodenneigung sensorisch erfasst wird.

15. Verfahren nach einem der vorangehenden Ansprüche 11 bis 14, wobei wenigstens ein Rotationskörper (39; 41, 42) zur Steuerung der Verseilung verschwenkt wird.
